# EUROPEAN PATENT APPLICATION

(11) **EP 4 794 113 A1**
(43) Date of publication of application: **19.08.2026**
(21) Application number: 24925462.4
(22) Date of filing: 21.08.2024
(51) Int. Cl.: H01M 50/609, H01M 50/618, G05B 19/05

(54) **ELECTROLYTE INJECTION SYSTEM AND ELECTROLYTE INJECTION METHOD**

(30) Priority: 22.02.2024 CN 202410199852
(71) Applicant: Contemporary Amperex Technology Co., Limited, Ningde, Fujian 352100 (CN)
(72) Inventor: LIN, Xingyuan, Ningde, Fujian 352100 (CN); HE, Zhiming, Ningde, Fujian 352100 (CN)
(74) Representative: Ran, Handong
(86) International application number: PCT/CN2024/113723
(87) International publication number: WO 2025/175721

(57) **Abstract**

An electrolyte injection system (100) and an electrolyte injection method. The electrolyte injection system (100) comprises an electrolyte injection device (110), an upper computer (120) and a control device (130), wherein the electrolyte injection device (110) comprises at least one electrolyte injection pump (111); the control device (130) is configured to send to the upper computer (120) pump information of a target electrolyte injection pump (111a) currently to be subjected to electrolyte preparation in the electrolyte injection device (110); the upper computer (120) is configured to: acquire pump information from the control device (130), determine, on the basis of the pump information and from among bearing positions of a battery cell tray currently entering the electrolyte injection device (110), a target bearing position currently corresponding to the target electrolyte injection pump (111a), determine, on the basis of a first correlation, a target electrolyte injection parameter corresponding to the target bearing position, with the first correlation comprising electrolyte injection parameters respectively corresponding to at least one bearing position, and issue the target electrolyte injection parameter to the target electrolyte injection pump (111a); and the target electrolyte injection pump (111a) is configured to perform electrolyte preparation according to the target electrolyte injection parameter, and after electrolyte preparation, perform electrolyte injection on a battery cell located at the target bearing position..

## Description

### CROSS-REFERENCE TO RELATED APPLICATIONS

The present disclosure is filed based on, and claims priority to, Chinese Patent Application No. 202410199852.1, filed on February 22, 2024 and entitled "Electrolyte Injection System and Electrolyte Injection Method", the entire content of which is hereby incorporated herein by reference.

### TECHNICAL FIELD

The present disclosure relates to, but is not limited to, the technical field of battery manufacturing, and in particular to an electrolyte injection system and an electrolyte injection method.

### BACKGROUND

In a manufacturing process of a battery product, an electrolyte injection system may be used to inject an electrolyte into a battery cell. In an electrolyte injection system in the related art, a battery cell code is set for each battery cell entering an electrolyte injection device, and the battery cell code of each battery cell is written into a control device of an electrolyte injection station through an upper computer. In addition, in an electrolyte preparation procedure, the upper computer acquires, from the control device, a battery cell code of a battery cell to be subjected to electrolyte injection that corresponds to an electrolyte injection pump, and issues an electrolyte injection parameter corresponding to the battery cell code to the electrolyte injection pump. However, in the solution of the electrolyte injection system, there are a relatively large quantity of point interactions between the upper computer and the control device, which results in a relatively low speed of electrolyte injection and station entry of the battery cell and issue of the electrolyte injection parameter from the upper computer to the electrolyte injection pump, thereby increasing overall duration of an electrolyte injection procedure and affecting manufacturing efficiency.

### SUMMARY

In view of this, embodiments of the present disclosure provide at least an electrolyte injection system and an electrolyte injection method, which can simplify an interaction process between an upper computer and a control device in an electrolyte injection procedure, reduce a quantity of point interactions between the upper computer and the control device, and accelerate electrolyte injection and station entry of a battery cell and issue of an electrolyte injection parameter from the upper computer to an electrolyte injection pump, thereby decreasing overall duration of the electrolyte injection procedure and improving manufacturing efficiency.

The technical solutions of the embodiments of the present disclosure are achieved as follows:

An embodiment of the present disclosure provides an electrolyte injection system, comprising:
an electrolyte injection device, an upper computer and a control device; wherein the electrolyte injection device comprises at least one electrolyte injection pump;
the control device is configured to send to the upper computer pump information of a target electrolyte injection pump currently to be subjected to electrolyte preparation in the electrolyte injection device;
the upper computer is configured to: acquire the pump information from the control device; determine, on the basis of the pump information and from among bearing positions in a battery cell tray currently entering the electrolyte injection device, a target bearing position currently corresponding to the target electrolyte injection pump; determine, on the basis of a first correspondence, a target electrolyte injection parameter corresponding to the target bearing position, with the first correspondence comprising electrolyte injection parameters respectively corresponding to at least one bearing position; and issue the target electrolyte injection parameter to the target electrolyte injection pump; and
the target electrolyte injection pump is configured to perform electrolyte preparation according to the target electrolyte injection parameter, and after electrolyte preparation, perform electrolyte injection on a battery cell located at the target bearing position.

In the electrolyte injection system in this embodiment of the present disclosure, the upper computer first acquires, from the control device, the pump information of the target electrolyte injection pump currently to be subjected to electrolyte preparation in the electrolyte injection device; then determines, on the basis of the pump information and from among the bearing positions in the battery cell tray currently entering the electrolyte injection device, the target bearing position currently corresponding to the target electrolyte injection pump; and finally determines, on the basis of the first correspondence, the target electrolyte injection parameter corresponding to the target bearing position, and issues the target electrolyte injection parameter to the target electrolyte injection pump, wherein the first correspondence comprises the electrolyte injection parameters respectively corresponding to the at least one bearing position in the battery cell tray. In this way, on the one hand, it is not necessary to set a battery cell code for each battery cell in the tray, so that the upper computer does not need to write the battery cell code into the control device in an electrolyte injection and station entry procedure of the battery cell, and the control device does not need to record the battery cell code of each battery cell in the battery cell tray in the electrolyte injection procedure. On the other hand, in an electrolyte preparation procedure, the control device does not need to provide, for the upper computer, a battery cell code of a battery cell currently to be subjected to electrolyte injection. As such, an interaction process between the upper computer and the control device in the electrolyte injection procedure can be simplified, a quantity of point interactions between the upper computer and the control device can be reduced, and electrolyte injection and station entry of the battery cell and issue of the electrolyte injection parameter from the upper computer to the electrolyte injection pump can be accelerated, thereby decreasing overall duration of the electrolyte injection procedure and improving manufacturing efficiency.

In some embodiments, each electrolyte injection pump corresponds to N bearing positions in the battery cell tray, the electrolyte injection pump is configured to perform electrolyte injection on battery cells at the N corresponding bearing positions in N batches, N is a positive integer, and N does not exceed a total quantity of bearing positions in the battery cell tray; the pump information comprises a pump number and/or a current electrolyte injection batch; and the upper computer is configured to determine, on the basis of the pump number and/or the current electrolyte injection batch, the target bearing position currently corresponding to the target electrolyte injection pump among the bearing positions in the battery cell tray.

In this way, the upper computer can simply and quickly determine, on the basis of the pump number and/or the current electrolyte injection batch of the target electrolyte injection pump provided by the control device, the target bearing position currently corresponding to the target electrolyte injection pump, thereby further reducing the quantity of point interactions between the upper computer and the control device.

In some embodiments, N is greater than 1; and the upper computer is configured to: determine, on the basis of the pump number, N bearing positions corresponding to the target electrolyte injection pump among the bearing positions in the battery cell tray; and determine, on the basis of the current electrolyte injection batch and from among the N bearing positions, the target bearing position currently corresponding to the target electrolyte injection pump.

In this way, the upper computer can quickly and accurately determine the target bearing position currently corresponding to the target electrolyte injection pump.

In some embodiments, the electrolyte injection device is provided with a plurality of electrolyte injection pumps, the plurality of electrolyte injection pumps are in one to-one correspondence with the bearing positions, and the pump information comprises a pump number; the upper computer is configured to determine, on the basis of the pump number and/or a second correspondence, the target bearing position currently corresponding to the target electrolyte injection pump; and the second correspondence represents a one to-one correspondence between at least one pump number and the bearing positions.

In this way, the target bearing position currently corresponding to the target electrolyte injection pump can be quickly and accurately determined on the basis of the pump number of the target electrolyte injection pump and the one to-one correspondence between the at least one pump number and the bearing positions in the battery cell tray.

In some embodiments, the upper computer is configured to acquire the first correspondence from a manufacturing execution system and record the first correspondence locally in the upper computer in a station entry procedure in which the battery cell tray enters the electrolyte injection device.

In this way, in the station entry procedure of the battery cell tray, the upper computer can acquire the first correspondence from the manufacturing execution system, to determine the target electrolyte injection parameter corresponding to the target bearing position in an electrolyte preparation procedure on the basis of the first correspondence, without a need for the upper computer to send the battery cell code of each battery cell in the battery cell tray to the control device, thereby reducing interaction between the upper computer and the control device in the station entry procedure, and accelerating station entry of the battery cell tray.

In some embodiments, the electrolyte injection parameter comprises an electrolyte injection amount; the upper computer is configured to: acquire an enabling/disabling status of a quantitative electrolyte injection mode; and determine, on the basis of the first correspondence, a target electrolyte injection amount corresponding to the target bearing position in a case that the enabling/disabling status is a first state; and the first state represents that the quantitative electrolyte injection mode is disabled.

In this way, the target electrolyte injection amount corresponding to the target bearing position can be determined on the basis of the first correspondence in a case that the quantitative electrolyte injection mode is disabled, thereby better satisfying an electrolyte injection requirement of a battery cell to be subjected to electrolyte injection at each bearing position in the battery cell tray in a non-quantitative electrolyte injection scenario.

In some embodiments, the upper computer is configured to acquire a preset electrolyte injection amount and determine the preset electrolyte injection amount as the target electrolyte injection amount corresponding to the target bearing position in a case that the enabling/disabling status is a second state; and the second state represents that the quantitative electrolyte injection mode is enabled.

In this way, the preset electrolyte injection amount can be determined as the target electrolyte injection amount corresponding to the target bearing position in a case that the quantitative electrolyte injection mode is enabled, so that issue of an electrolyte injection amount in a quantitative electrolyte injection scenario can be supported, to satisfy a quantitative electrolyte injection requirement of a battery cell to be subjected to electrolyte injection at each bearing position in the battery cell tray.

In some embodiments, the upper computer has a first display interface, and the first display interface comprises a mode configuration area; and the upper computer is configured to set the enabling/disabling status to the first state in response to receiving a quantitative electrolyte injection mode disabling operation performed in the mode configuration area; or the upper computer is configured to set the enabling/disabling status to the second state in response to receiving a quantitative electrolyte injection mode enabling operation performed in the mode configuration area.

In this way, the quantitative electrolyte injection mode can be flexibly enabled or disabled in the mode configuration area of the first display interface of the upper computer, thereby adapting to different electrolyte injection scenarios, to better satisfy an actual manufacturing requirement.

In some embodiments, the first display interface further comprises an electrolyte injection amount configuration area; and the upper computer is configured to acquire the set preset electrolyte injection amount in response to receiving an electrolyte injection amount setting operation performed in the electrolyte injection amount configuration area.

In this way, a suitable preset electrolyte injection amount can be set in the electrolyte injection amount configuration area of the first display interface of the upper computer according to an actual requirement, to better satisfy a quantitative electrolyte injection requirement in an actual manufacturing process.

In some embodiments, the control device is configured to: acquire electrolyte injection data of a battery cell in an electrolyte injection procedure of the battery cell, and send a data collection signal to the upper computer in response to determining that electrolyte injection of at least one battery cell borne in the battery cell tray is completed; and the upper computer is configured to acquire electrolyte injection data of the at least one battery cell from the control device in response to receiving the data collection signal, and for each battery cell, bind and store electrolyte injection data of the battery cell and a bearing position of the battery cell in the battery cell tray locally in the upper computer.

In this way, the upper computer can collect and locally record the electrolyte injection data of the battery cell after electrolyte injection of the battery cell is completed. In addition, the electrolyte injection data of the battery cell and the bearing position of the battery cell in the battery cell tray are bound and stored, so that the electrolyte injection data of the corresponding battery cell can be acquired on the basis of the bearing position in the battery cell tray in a subsequent procedure. Further, after determining that electrolyte injection of the battery cell is completed, the control device sends the data collection signal to the upper computer, so that the upper computer can be controlled to acquire and record the electrolyte injection data of the battery cell in a timely manner, thereby reducing the probability of losing the electrolyte injection data due to an abnormal situation such as a power failure of the control device, and improving reliability of electrolyte injection data collection and operation stability of the electrolyte injection system.

In some embodiments, the upper computer is configured to determine an electrolyte injection completion status of the battery cell on the basis of the electrolyte injection data of the battery cell, and bind and store the electrolyte injection data of the battery cell, the bearing position of the battery cell in the battery cell tray, and the electrolyte injection completion status locally in the upper computer.

In this way, the electrolyte injection data of the battery cell, the bearing position of the battery cell in the battery cell tray, and the electrolyte injection completion status are bound and stored locally in the upper computer, so that the electrolyte injection data of the battery cell can be acquired and/or whether electrolyte injection of the battery cell is completed can be determined quickly and accurately on the basis of the bearing position of the battery cell in the battery cell tray in a subsequent procedure.

An embodiment of the present disclosure provides an electrolyte injection method, applied to an upper computer, and comprising:
acquiring, from a control device, pump information of a target electrolyte injection pump currently to be subjected to electrolyte preparation in an electrolyte injection device;
determining, on the basis of the pump information and from among bearing positions in a battery cell tray currently entering the electrolyte injection device, a target bearing position currently corresponding to the target electrolyte injection pump;
determining, on the basis of a first correspondence, a target electrolyte injection parameter corresponding to the target bearing position, with the first correspondence comprising electrolyte injection parameters respectively corresponding to at least one bearing position; and
issuing the target electrolyte injection parameter to the target electrolyte injection pump, so that the target electrolyte injection pump performs electrolyte preparation according to the target electrolyte injection parameter, and after electrolyte preparation, performs electrolyte injection on a battery cell located at the target bearing position.

In the electrolyte injection method in this embodiment of the present disclosure, the upper computer first acquires, from the control device, the pump information of the target electrolyte injection pump currently to be subjected to electrolyte preparation in the electrolyte injection device; then determines, on the basis of the pump information and from among the bearing positions in the battery cell tray currently entering the electrolyte injection device, the target bearing position currently corresponding to the target electrolyte injection pump; and finally determines, on the basis of the first correspondence, the target electrolyte injection parameter corresponding to the target bearing position, and issues the target electrolyte injection parameter to the target electrolyte injection pump, wherein the first correspondence comprises the electrolyte injection parameters respectively corresponding to the at least one bearing position in the battery cell tray. In this way, on the one hand, it is not necessary to set a battery cell code for each battery cell in the tray, so that the upper computer does not need to write the battery cell code into the control device in an electrolyte injection and station entry procedure of the battery cell, and the control device does not need to record the battery cell code of each battery cell in the battery cell tray in the electrolyte injection procedure. On the other hand, in an electrolyte preparation procedure, the control device does not need to provide, for the upper computer, a battery cell code of a battery cell currently to be subjected to electrolyte injection. As such, an interaction process between the upper computer and the control device in the electrolyte injection procedure can be simplified, a quantity of point interactions between the upper computer and the control device can be reduced, and electrolyte injection and station entry of the battery cell and issue of the electrolyte injection parameter from the upper computer to the electrolyte injection pump can be accelerated, thereby decreasing overall duration of the electrolyte injection procedure and improving manufacturing efficiency.

In some embodiments, the electrolyte injection device comprises at least one electrolyte injection pump, each electrolyte injection pump corresponds to N bearing positions in the battery cell tray, the electrolyte injection pump is configured to perform electrolyte injection on battery cells at the N corresponding bearing positions in N batches, N is a positive integer, and N does not exceed a total quantity of bearing positions in the battery cell tray; the pump information comprises a pump number and/or a current electrolyte injection batch; and the determining, on the basis of the pump information and from among bearing positions in a battery cell tray currently entering the electrolyte injection device, a target bearing position currently corresponding to the target electrolyte injection pump comprises: determining, on the basis of the pump number and/or the current electrolyte injection batch, the target bearing position currently corresponding to the target electrolyte injection pump among the bearing positions in the battery cell tray.

In this way, the upper computer can simply and quickly determine, on the basis of the pump number and/or the current electrolyte injection batch of the target electrolyte injection pump provided by the control device, the target bearing position currently corresponding to the target electrolyte injection pump, thereby further reducing the quantity of point interactions between the upper computer and the control device.

In some embodiments, N is greater than 1; and the determining, on the basis of the pump number and/or the current electrolyte injection batch, the target bearing position currently corresponding to the target electrolyte injection pump among the bearing positions in the battery cell tray comprises: determining, on the basis of the pump number, N bearing positions corresponding to the target electrolyte injection pump among the bearing positions in the battery cell tray; and determining, on the basis of the current electrolyte injection batch and from among the N bearing positions, the target bearing position currently corresponding to the target electrolyte injection pump.

In this way, the upper computer can quickly and accurately determine the target bearing position currently corresponding to the target electrolyte injection pump.

In some embodiments, the electrolyte injection device is provided with a plurality of electrolyte injection pumps, the plurality of electrolyte injection pumps are in one to-one correspondence with the bearing positions, and the pump information comprises a pump number; the determining, on the basis of the pump information and from among bearing positions in a battery cell tray currently entering the electrolyte injection device, a target bearing position currently corresponding to the target electrolyte injection pump comprises: determining, on the basis of the pump number and a second correspondence, the target bearing position currently corresponding to the target electrolyte injection pump; and the second correspondence represents a one to-one correspondence between at least one pump number and the bearing positions.

In this way, the target bearing position currently corresponding to the target electrolyte injection pump can be quickly and accurately determined on the basis of the pump number of the target electrolyte injection pump and the one to-one correspondence between the at least one pump number and the bearing positions in the battery cell tray.

In some embodiments, the electrolyte injection parameter comprises an electrolyte injection amount; the determining, on the basis of a first correspondence, a target electrolyte injection parameter corresponding to the target bearing position comprises: acquiring an enabling/disabling status of a quantitative electrolyte injection mode; and determining, on the basis of the first correspondence, a target electrolyte injection amount corresponding to the target bearing position in a case that the enabling/disabling status is a first state; and the first state represents that the quantitative electrolyte injection mode is disabled.

In this way, the target electrolyte injection amount corresponding to the target bearing position can be determined on the basis of the first correspondence in a case that the quantitative electrolyte injection mode is disabled, thereby better satisfying an electrolyte injection requirement of a battery cell to be subjected to electrolyte injection at each bearing position in the battery cell tray in a non-quantitative electrolyte injection scenario.

In some embodiments, the electrolyte injection method further comprises: acquiring a preset electrolyte injection amount in a case that the enabling/disabling status is a second state; wherein the second state represents that the quantitative electrolyte injection mode is enabled; and determining the preset electrolyte injection amount as the target electrolyte injection amount corresponding to the target bearing position.

In this way, the preset electrolyte injection amount can be determined as the target electrolyte injection amount corresponding to the target bearing position in a case that the quantitative electrolyte injection mode is enabled, so that issue of an electrolyte injection amount in a quantitative electrolyte injection scenario can be supported, to satisfy a quantitative electrolyte injection requirement of a battery cell to be subjected to electrolyte injection at each bearing position in the battery cell tray.

In some embodiments, the electrolyte injection method further comprises: acquiring electrolyte injection data of at least one battery cell borne in the battery cell tray from the control device in response to receiving a data collection signal sent by the control device; wherein the data collection signal is sent by the control device after the control device determines that electrolyte injection of the at least one battery cell is completed, and the electrolyte injection data of the battery cell is acquired by the control device in an electrolyte injection procedure of the battery cell; and for each battery cell, binding and storing electrolyte injection data of the battery cell and a bearing position of the battery cell in the battery cell tray locally in the upper computer.

In this way, the upper computer can collect and locally record the electrolyte injection data of the battery cell after electrolyte injection of the battery cell is completed. In addition, the electrolyte injection data of the battery cell and the bearing position of the battery cell in the battery cell tray are bound and stored, so that the electrolyte injection data of the corresponding battery cell can be acquired on the basis of the bearing position in the battery cell tray in a subsequent procedure. Further, after determining that electrolyte injection of the battery cell is completed, the control device sends the data collection signal to the upper computer, so that the upper computer can be controlled to acquire and record the electrolyte injection data of the battery cell in a timely manner, thereby reducing the probability of losing the electrolyte injection data due to an abnormal situation such as a power failure of the control device, and improving reliability of electrolyte injection data collection and operation stability of the electrolyte injection system.

It should be understood that the above-mentioned general description and the following detailed description are merely exemplary and explanatory, and do not limit the technical solutions of the present disclosure.

### BRIEF DESCRIPTION OF THE DRAWINGS

The accompanying drawings herein are incorporated into the specification and constitute a part of the specification, and these accompanying drawings show embodiments consistent with the present disclosure and are used together with the specification to illustrate the technical solutions of the present disclosure.
FIG. 1 is a schematic diagram of a composition structure of an electrolyte injection system according to an embodiment of the present disclosure;
FIG. 2 is a schematic diagram of a first display interface according to an embodiment of the present disclosure;
FIG. 3 is a schematic diagram of a second display interface according to an embodiment of the present disclosure;
FIG. 4 is a schematic flowchart of implementation of an electrolyte injection method according to an embodiment of the present disclosure;
FIG. 5 is a schematic diagram of implementation of an issue procedure of an electrolyte injection amount of a battery cell according to an embodiment of the present disclosure;
FIG. 6 is a schematic diagram of implementation of a collection procedure of electrolyte injection data of a battery cell according to an embodiment of the present disclosure; and
FIG. 7 is a schematic diagram of implementation of a marking procedure of an electrolyte injection completion status of a battery cell according to an embodiment of the present disclosure.

### DETAILED DESCRIPTION OF PREFERRED EMBODIMENTS

In order to make the objectives, technical solutions, and advantages of the present disclosure clearer, the technical solutions of the present disclosure are further described in detail below with reference to the accompanying drawings and embodiments. The described embodiments should not be construed as a limitation on the present disclosure, and all other embodiments obtained by those of ordinary skill in the art without any creative effort shall fall within the scope of protection of the present disclosure.

In the following description, reference is made to "some embodiments", which describe a subset of all possible embodiments. However, it can be understood that "some embodiments" may be the same subset or different subsets of all the possible embodiments, and may be combined with each other in a case without a conflict.

The related terms "first/second/third" are merely used to distinguish between similar objects, and do not represent a specific order of the objects. It can be understood that a specific order or sequence of "first/second/third" can be interchanged when allowed, so that the embodiments of the present disclosure described herein can be implemented in an order other than those illustrated or described herein.

Unless otherwise defined, all technical and scientific terms used herein have the same meaning as commonly understood by those skilled in the art to which the present disclosure belongs. The terms used in this specification are merely for the purpose of describing the present disclosure, but are not intended to limit the present disclosure.

The following describes the embodiments of the present disclosure in detail.

Currently, new energy batteries are more widely used in life and industry. New energy batteries are used not only in energy storage power systems such as hydropower, thermal power, wind power, and solar power plants, but also in electric tools such as electric bicycles, electric motorcycles, and electric vehicles, as well as aerospace and many other fields. As an application field of power batteries continues to expand, a market demand for power batteries continues to increase.

In the embodiments of the present disclosure, a battery cell may be a battery cell. The battery cell refers to a basic unit that can implement mutual conversion between chemical energy and electrical energy, and can be used to manufacture a battery module or a battery pack, so as to supply power to a power-consuming apparatus. The battery cell may be a secondary battery, and the secondary battery refers to a battery cell that may be continuously used by activating an active material through charging after the battery cell is discharged. The battery cell may be a lithium ion battery, a sodium ion battery, a sodium-lithium ion battery, a lithium metal battery, a sodium metal battery, a lithium-sulfur battery, a magnesium ion battery, a nickel-hydrogen battery, a nickelcadmium battery, a lead-acid battery, or the like, without limitation for the battery cell in the embodiments of the present disclosure. In the embodiments of the present disclosure, a battery may alternatively be a single physical module including one or a plurality of battery cells to provide a higher voltage and capacity. When there are a plurality of battery cells, the plurality of battery cells are connected in series, in parallel, or in series-parallel via a busbar component.

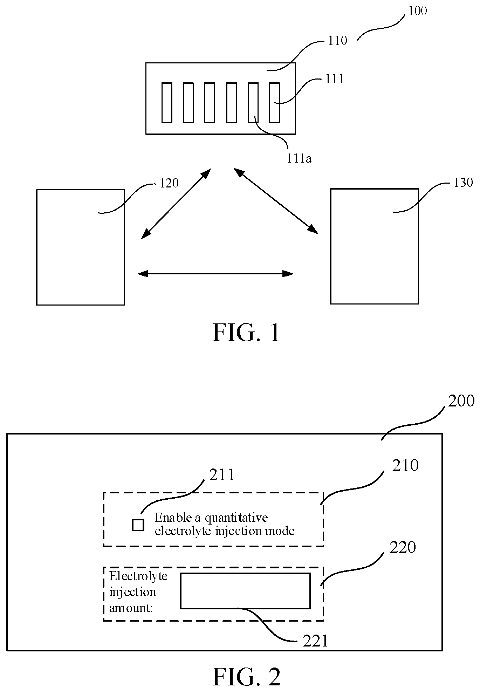

An embodiment of the present disclosure provides an electrolyte injection system. As shown in FIG. 1, the electrolyte injection system 100 includes:
an electrolyte injection device 110, an upper computer 120 and a control device 130. The electrolyte injection device 110 includes at least one electrolyte injection pump 111.

The control device 130 is configured to send to the upper computer 120 pump information of a target electrolyte injection pump 111a currently to be subjected to electrolyte preparation in the electrolyte injection device.

The upper computer 120 is configured to: acquire the pump information from the control device 130; determine, on the basis of the pump information and from among bearing positions in a battery cell tray currently entering the electrolyte injection device 110, a target bearing position currently corresponding to the target electrolyte injection pump 111a; determine, on the basis of a first correspondence, a target electrolyte injection parameter corresponding to the target bearing position, with the first correspondence including electrolyte injection parameters respectively corresponding to at least one bearing position; and issue the target electrolyte injection parameter to the target electrolyte injection pump 111a.

The target electrolyte injection pump 111a is configured to perform electrolyte preparation according to the target electrolyte injection parameter, and after electrolyte preparation, perform electrolyte injection on a battery cell located at the target bearing position.

It can be understood that the electrolyte injection system 100 can be applied to, but not limited to, a first electrolyte injection procedure, a second electrolyte injection procedure, and/or an electrolyte replenishing procedure of the battery cell.

In some embodiments, the electrolyte injection device 110 can perform electrolyte injection on the battery cell in a tray-type electrolyte injection manner. During implementation, a set of battery cells to be subjected to electrolyte injection may be loaded into a battery cell tray and put into the electrolyte injection device 110, and then at least one electrolyte injection pump 111 in the electrolyte injection device 110 is used to perform electrolyte injection on a battery cell placed at least one position in the battery cell tray. During implementation, the electrolyte injection device 110 may be disposed at an electrolyte injection station in an electrolyte injection workstation.

The upper computer 120 may be configured to control a flow of an electrolyte injection process. During implementation, the upper computer 120 may be, for example, at least one of a server, a notebook computer, a tablet computer, a desktop computer, a smartphone, and the like.

The control device 130 may be configured to control an operation process of each mechanism in the electrolyte injection workstation. During implementation, the control device 130 may be, for example, an industrial computer, a programmable logic controller (PLC), or the like. For example, the control device 130 may be a PLC for controlling an operation process of the electrolyte injection device 110.

Before electrolyte injection is performed on the battery cell borne in the battery cell tray, at least one electrolyte injection pump 111 in the electrolyte injection device 110 may perform electrolyte preparation in advance, and the control device 130 may send to the upper computer 120 the pump information of the target electrolyte injection pump 111a currently to be subjected to electrolyte preparation. There may be one, two, or more target electrolyte injection pumps 111a. The pump information of the target electrolyte injection pump 111a may include, but is not limited to, a pump number of the target electrolyte injection pump 111a and/or a current electrolyte injection batch of the target electrolyte injection pump 111a.

In some embodiments, a pump information point may be set in the control device 130 in advance, and in a case that the target electrolyte injection pump 111a is currently to be subjected to electrolyte preparation, the control device 130 may write the pump information of the target electrolyte injection pump 111a into the pump information point, and the upper computer 120 may read the pump information of the target electrolyte injection pump 111a from the pump information point. It can be understood that, on the basis of an amount of information included in the pump information in an actual application scenario, one, two, or more pump information points may be set in the control device 130.

After acquiring the pump information of the target electrolyte injection pump 111a from the control device 130, the upper computer 120 may determine, on the basis of the pump information in any preset suitable manner, the target bearing position currently corresponding to the target electrolyte injection pump 111a. It can be understood that the target bearing position currently corresponding to the target electrolyte injection pump 111a refers to a bearing position of a battery cell currently to be subjected to electrolyte injection by the target electrolyte injection pump 111a among the bearing positions in the battery cell tray. In some embodiments, a mapping relationship between at least one type of pump information and at least one bearing position in the battery cell tray may be established in advance, and the target bearing position currently corresponding to the target electrolyte injection pump 111a may be determined on the basis of the mapping relationship. During implementation, the mapping relationship may be preset by those skilled in the art according to an actual situation, for example, at least one of a preset mapping relationship table, a preset mapping formula, and the like, which is not limited in the embodiments of the present disclosure.

The first correspondence may represent an association relationship between a bearing position in the battery cell tray and an electrolyte injection parameter. The first correspondence includes the electrolyte injection parameters respectively corresponding to the at least one bearing position in the battery cell tray. The upper computer 120 can determine the target electrolyte injection parameter corresponding to the target bearing position by querying the first correspondence. In some embodiments, the first correspondence may be stored in advance locally in the upper computer 120. For example, the first correspondence may be stored in advance in a local cache of the upper computer 120 or a database.

The electrolyte injection parameter may include, but is not limited to, whether to perform electrolyte injection, an electrolyte injection amount, an electrolyte type, and/or the like. For example, in a case that the target electrolyte injection parameter includes an electrolyte injection amount, the target electrolyte injection pump 111a may perform electrolyte preparation on the basis of the electrolyte injection amount. For another example, in a case that the target electrolyte injection parameter includes first information representing that electrolyte injection is not performed, the target electrolyte injection pump 111a may not perform electrolyte preparation. For another example, in a case that the target electrolyte injection parameter includes second information representing that electrolyte injection is performed, the target electrolyte injection pump 111a may perform electrolyte preparation on the basis of a preset electrolyte injection amount or an electrolyte injection amount included in the target electrolyte injection parameter.

In the electrolyte injection system in this embodiment of the present disclosure, the upper computer first acquires, from the control device, the pump information of the target electrolyte injection pump currently to be subjected to electrolyte preparation in the electrolyte injection device; then determines, on the basis of the pump information and from among the bearing positions in the battery cell tray currently entering the electrolyte injection device, the target bearing position currently corresponding to the target electrolyte injection pump; and finally determines, on the basis of the first correspondence, the target electrolyte injection parameter corresponding to the target bearing position, and issues the target electrolyte injection parameter to the target electrolyte injection pump, where the first correspondence includes the electrolyte injection parameters respectively corresponding to the at least one bearing position in the battery cell tray. In this way, on the one hand, it is not necessary to set a battery cell code for each battery cell in the tray, so that the upper computer does not need to write the battery cell code into the control device in an electrolyte injection and station entry procedure of the battery cell, and the control device does not need to record the battery cell code of each battery cell in the battery cell tray in the electrolyte injection procedure. On the other hand, in an electrolyte preparation procedure, the control device does not need to provide, for the upper computer, a battery cell code of a battery cell currently to be subjected to electrolyte injection. As such, an interaction process between the upper computer and the control device in the electrolyte injection procedure can be simplified, a quantity of point interactions between the upper computer and the control device can be reduced, and electrolyte injection and station entry of the battery cell and issue of the electrolyte injection parameter from the upper computer to the electrolyte injection pump can be accelerated, thereby decreasing overall duration of the electrolyte injection procedure and improving manufacturing efficiency.

In some embodiments, each electrolyte injection pump 111 corresponds to N bearing positions in the battery cell tray, the electrolyte injection pump 111 is configured to perform electrolyte injection on battery cells at the N corresponding bearing positions in N batches, N is a positive integer, and N does not exceed a total quantity of bearing positions in the battery cell tray. The pump information includes a pump number and/or a current electrolyte injection batch.

The upper computer 120 is configured to determine, on the basis of the pump number and/or the current electrolyte injection batch, the target bearing position currently corresponding to the target electrolyte injection pump among the bearing positions in the battery cell tray.

Here, those skilled in the art may preset a correspondence between each electrolyte injection pump 111 in the electrolyte injection device 110 and each bearing position in the battery cell tray in any suitable manner according to an actual situation, so that each electrolyte injection pump 111 corresponds to N bearing positions in the battery cell tray, which is not limited in the embodiments of the present disclosure.

In some embodiments, the bearing positions in the battery cell tray may be evenly divided into a plurality of groups, each group of bearing positions includes N bearing positions, and the same group of bearing positions corresponds to the same electrolyte injection pump 111. In this way, each electrolyte injection pump 111 can correspond to N bearing positions in the battery cell tray.

The electrolyte injection pump 111 may be configured to perform electrolyte injection on battery cells at the N corresponding bearing positions in N batches, and the electrolyte injection pump 111 may perform electrolyte injection on one battery cell in each batch. N may be any suitable positive integer not exceeding a total quantity of bearing positions in the battery cell tray. During implementation, the quantity of N may be determined according to an actual situation, which is not limited in the embodiments of the present disclosure. For example, N may be a ratio of the total quantity of bearing positions in the battery cell tray to a quantity of electrolyte injection pumps 111 in the electrolyte injection device 110. For example, if the total quantity of bearing positions in the battery cell tray is 24, and the quantity of electrolyte injection pumps 111 in the electrolyte injection device 110 is 6, N may be 4, that is, each electrolyte injection pump 111 may correspond to four electrolyte injection pumps 111 in the battery cell tray.

In some embodiments, N may be 1, that is, each electrolyte injection pump 111 in the electrolyte injection device 110 corresponds to one bearing position in the battery cell tray, to perform electrolyte injection on a battery cell at the bearing position. In this way, the upper computer 120 can determine, on the basis of the pump number of the target electrolyte injection pump 111a, the target bearing position currently corresponding to the target electrolyte injection pump 111a among the bearing positions in the battery cell tray. For example, the pump number of the target electrolyte injection pump 111a may be used to query the correspondence between each electrolyte injection pump 111 and each weighing position in the battery cell tray, to obtain the target bearing position currently corresponding to the target electrolyte injection pump 111a.

In some embodiments, the electrolyte injection device 110 includes a plurality of electrolyte injection pumps 111, and N may be greater than 1 and not exceed the total quantity of bearing positions in the battery cell tray, that is, each electrolyte injection pump 111 in the electrolyte injection device 110 corresponds to a plurality of bearing positions in the battery cell tray, to perform electrolyte injection on battery cells at the plurality of bearing positions. In this way, the upper computer 120 can determine, on the basis of the pump number and the current electrolyte injection batch of the target electrolyte injection pump 111a, the target bearing position currently corresponding to the target electrolyte injection pump 111a among the bearing positions in the battery cell tray.

In some embodiments, the electrolyte injection device 110 includes one electrolyte injection pump 111, and N may be the total quantity of bearing positions in the battery cell tray, that is, one electrolyte injection pump 111 in the electrolyte injection device 110 corresponds to all the bearing positions in the battery cell tray, to perform electrolyte injection on battery cells at all the bearing positions. In this way, the upper computer 120 can determine, on the basis of the current electrolyte injection batch of the target electrolyte injection pump 111a, the target bearing position currently corresponding to the target electrolyte injection pump 111a among the bearing positions in the battery cell tray. For example, the target electrolyte injection pump 111a may sequentially perform electrolyte injection for the bearing positions in the battery cell tray. In a case that the current electrolyte injection batch is 1, it may be determined that the target bearing position currently corresponding to the target electrolyte injection pump 111a is a position 1. In a case that the current electrolyte injection batch is 2, it may be determined that the target bearing position currently corresponding to the target electrolyte injection pump 111a is a position 2; and so on.

In the above-mentioned embodiment, the upper computer can simply and quickly determine, on the basis of the pump number and/or the current electrolyte injection batch of the target electrolyte injection pump provided by the control device, the target bearing position currently corresponding to the target electrolyte injection pump, thereby further reducing the quantity of point interactions between the upper computer and the control device.

In some embodiments, N is greater than 1. The upper computer 120 is configured to: determine, on the basis of the pump number, N bearing positions corresponding to the target electrolyte injection pump 111a among the bearing positions in the battery cell tray; and determine, on the basis of the current electrolyte injection batch and from among the N bearing positions, the target bearing position currently corresponding to the target electrolyte injection pump 111a.

Here, a mapping relationship between a pump number, an electrolyte injection batch, and a bearing position in the battery cell tray may be preset, the N bearing positions corresponding to the target electrolyte injection pump 111a may be determined according to the mapping relationship and on the basis of the pump number of the target electrolyte injection pump 111a, and then the target bearing position currently corresponding to the target electrolyte injection pump 111a is determined on the basis of the current electrolyte injection batch. During implementation, the mapping relationship between the pump number, the electrolyte injection batch, and the bearing position in the battery cell tray may be set by those skilled in the art according to an actual situation, which is not limited in the embodiments of the present disclosure.

In some embodiments, position numbers of N bearing positions corresponding to the same electrolyte injection pump 111 are consecutive, a position number of the first bearing position in the N consecutive bearing positions corresponding to the target electrolyte injection pump 111 may be used as a start position number, and 1 is subtracted from a sum of the start position number and the current electrolyte injection batch to obtain a position number of the target bearing position. For example, in a case that the quantity of electrolyte injection pumps 111 is 6, and the quantity of bearing positions in the battery cell tray is 24, the first electrolyte injection pump may correspond to positions 1 to 4, the second electrolyte injection pump may correspond to positions 5 to 8, the third electrolyte injection pump may correspond to positions 9 to 12, and by analogy, the sixth electrolyte injection pump may correspond to positions 21 to 24. If the target electrolyte injection pump 111a is the i^{th} electrolyte injection pump, the position number of the first bearing position in the N bearing positions corresponding to the target electrolyte injection pump 111 is (i-1)*4+1. In a case that the current electrolyte injection batch is the j^{th} batch, the target bearing position currently corresponding to the target electrolyte injection pump 111a is a position (i-1)*4+j. For example, if the target electrolyte injection pump 111a is the second electrolyte injection pump, in a case that the current electrolyte injection batch is the first batch, the target bearing position currently corresponding to the target electrolyte injection pump 111a is the position 5, or in a case that the current electrolyte injection batch is the second batch, the target bearing position currently corresponding to the target electrolyte injection pump 111a is the position 6.

In the above-mentioned embodiment, the upper computer determines, on the basis of the pump number, the N bearing positions corresponding to the target electrolyte injection pump among the bearing positions in the battery cell tray, and determines, on the basis of the current electrolyte injection batch and from among the N bearing positions, the target bearing position currently corresponding to the target electrolyte injection pump. In this way, the upper computer can quickly and accurately determine the target bearing position currently corresponding to the target electrolyte injection pump.

In some embodiments, the electrolyte injection device 110 is provided with a plurality of electrolyte injection pumps 111, the plurality of electrolyte injection pumps 111 are in one to-one correspondence with the bearing positions, and the pump information includes a pump number.

The upper computer 120 is configured to determine, on the basis of the pump number and a second correspondence, the target bearing position currently corresponding to the target electrolyte injection pump 111a. The second correspondence represents a one to-one correspondence between at least one pump number and the bearing positions.

Here, the second correspondence may be preset by those skilled in the art according to an actual application scenario, which is not limited in the embodiments of the present disclosure.

In this way, the target bearing position currently corresponding to the target electrolyte injection pump can be quickly and accurately determined on the basis of the pump number of the target electrolyte injection pump and the one to-one correspondence between the at least one pump number and the bearing positions in the battery cell tray.

In some embodiments, the upper computer 120 is configured to acquire the first correspondence from a manufacturing execution system and record the first correspondence locally in the upper computer in a station entry procedure in which the battery cell tray enters the electrolyte injection device 110.

Here, electrolyte injection parameters of battery cells to be subjected to electrolyte injection that are placed at bearing positions in battery cell trays on a logistics line may be determined in advance by the manufacturing execution system (MES), and a first correspondence corresponding to each battery cell tray is determined and recorded on the basis of electrolyte injection parameters respectively corresponding to bearing positions in each battery cell tray.

In some embodiments, in a process in which the battery cell tray scans a code to enter a station, the upper computer 120 may scan a code to acquire a tray identifier of the battery cell tray currently entering the electrolyte injection device 110, acquire the first correspondence corresponding to the battery cell tray from the manufacturing execution system on the basis of the tray identifier, and record the first correspondence locally in the upper computer 120.

In the above-mentioned embodiment, in the station entry procedure of the battery cell tray, the upper computer can acquire the first correspondence from the manufacturing execution system, to determine the target electrolyte injection parameter corresponding to the target bearing position in an electrolyte preparation procedure on the basis of the first correspondence, without a need for the upper computer to send the battery cell code of each battery cell in the battery cell tray to the control device, thereby reducing interaction between the upper computer and the control device in the station entry procedure, and accelerating station entry of the battery cell tray.

In some embodiments, the electrolyte injection parameter includes an electrolyte injection amount.

The upper computer 120 is configured to: acquire an enabling/disabling status of a quantitative electrolyte injection mode; and determine, on the basis of the first correspondence, a target electrolyte injection amount corresponding to the target bearing position in a case that the enabling/disabling status is a first state. The first state represents that the quantitative electrolyte injection mode is disabled.

Here, the quantitative electrolyte injection mode refers to a mode in which electrolyte injection is performed on a battery cell by using a fixed electrolyte injection amount. In a case that the quantitative electrolyte injection mode is enabled, the upper computer 120 may issue a fixed electrolyte injection amount to the electrolyte injection pump, to perform electrolyte injection on the battery cell according to the fixed electrolyte injection amount by using the electrolyte injection pump. In a case that the quantitative electrolyte injection mode is disabled, the upper computer 120 may determine, on the basis of the first correspondence, the target electrolyte injection amount corresponding to the target bearing position, to perform quantitative electrolyte injection on the battery cell according to the target electrolyte injection amount by using the electrolyte injection pump.

It can be understood that in some scenarios, electrolyte injection amounts needed by battery cells are different. This belongs to a non-quantitative electrolyte injection scenario, and electrolyte injection cannot be performed in the quantitative electrolyte injection mode, but a suitable target electrolyte injection amount needs to be determined for the battery cell according to an actual requirement. For example, in a scenario of secondary electrolyte injection of a battery cell, electrolyte injection amounts needed by battery cells may be different. Therefore, in the non-quantitative electrolyte injection scenario, the quantitative electrolyte injection mode may be disabled. In some scenarios, electrolyte injection amounts needed by battery cells are the same. This belongs to a quantitative electrolyte injection scenario, and electrolyte injection can be performed in the quantitative electrolyte injection mode. For example, in a scenario in which electrolyte injection is performed on a battery cell for the first time or in an electrolyte injection test scenario, electrolyte injection may be performed on the battery cell by using a fixed electrolyte injection amount. Therefore, in the quantitative electrolyte injection scenario, the quantitative electrolyte injection mode may be enabled.

In this way, the target electrolyte injection amount corresponding to the target bearing position can be determined on the basis of the first correspondence in a case that the quantitative electrolyte injection mode is disabled, thereby better satisfying an electrolyte injection requirement of a battery cell to be subjected to electrolyte injection at each bearing position in the battery cell tray in a non-quantitative electrolyte injection scenario.

In some embodiments, the upper computer 120 is configured to acquire a preset electrolyte injection amount and determine the preset electrolyte injection amount as the target electrolyte injection amount corresponding to the target bearing position in a case that the enabling/disabling status is a second state. The second state represents that the quantitative electrolyte injection mode is enabled.

Here, the preset electrolyte injection amount may be any suitable electrolyte injection amount set in advance, which is not limited in the embodiments of the present disclosure.

For example, the preset electrolyte injection amount may be a value set by an operator according to an actual application scenario, or may be a default value in the upper computer 120.

In this way, the preset electrolyte injection amount can be determined as the target electrolyte injection amount corresponding to the target bearing position in a case that the quantitative electrolyte injection mode is enabled, so that issue of an electrolyte injection amount in a quantitative electrolyte injection scenario can be supported, to satisfy a quantitative electrolyte injection requirement of a battery cell to be subjected to electrolyte injection at each bearing position in the battery cell tray.

In some embodiments, the upper computer 120 has a first display interface, and the first display interface includes a mode configuration area.

The upper computer 120 is configured to set the enabling/disabling status to the first state in response to receiving a quantitative electrolyte injection mode disabling operation performed in the mode configuration area.

Alternatively, the upper computer 120 is configured to set the enabling/disabling status to the second state in response to receiving a quantitative electrolyte injection mode enabling operation performed in the mode configuration area.

During implementation, an interface layout of the first display interface of the upper computer, an interface layout of the mode configuration area in the first display interface, and an operation mode of the enabling/disabling operation for the quantitative electrolyte injection mode may be determined by those skilled in the art according to an actual situation, which is not limited in the embodiments of the present disclosure.

For example, referring to FIG. 2, a first display interface 200 may include a mode configuration area 210, and the operator may trigger a switch control 211 in the mode configuration area 210 to implement the enabling/disabling operation for the quantitative electrolyte injection mode.

In this way, the quantitative electrolyte injection mode can be flexibly enabled or disabled in the mode configuration area of the first display interface of the upper computer, thereby adapting to different electrolyte injection scenarios, to better satisfy an actual manufacturing requirement.

In some embodiments, the first display interface further includes an electrolyte injection amount configuration area.

The upper computer 120 is configured to acquire the set preset electrolyte injection amount in response to receiving an electrolyte injection amount setting operation performed in the electrolyte injection amount configuration area.

During implementation, an interface layout of the electrolyte injection amount configuration area and an operation mode of the electrolyte injection amount setting operation may be determined by those skilled in the art according to an actual situation, which is not limited in the embodiments of the present disclosure.

For example, still referring to FIG. 2, the first display interface 200 may further include an electrolyte injection amount configuration area 220, and the operator may input a preset electrolyte injection amount into an input control 221 in the electrolyte injection amount configuration area 220 to implement the electrolyte injection amount setting operation.

In this way, a suitable preset electrolyte injection amount can be set in the electrolyte injection amount configuration area of the first display interface of the upper computer according to an actual requirement, to better satisfy a quantitative electrolyte injection requirement in an actual manufacturing process.

In some embodiments, the control device 130 is configured to: acquire electrolyte injection data of a battery cell in an electrolyte injection procedure of the battery cell, and send a data collection signal to the upper computer 120 in response to determining that electrolyte injection of at least one battery cell borne in the battery cell tray is completed.

The upper computer 120 is configured to acquire electrolyte injection data of the at least one battery cell from the control device 130 in response to receiving the data collection signal, and for each battery cell, bind and store electrolyte injection data of the battery cell and a bearing position of the battery cell in the battery cell tray locally in the upper computer 120.

The electrolyte injection data of the battery cell may include electrolyte injection process data of the battery cell, for example, at least one of an electrolyte injection amount, electrolyte injection duration, an amount of retained injected electrolyte, a weighing result before electrolyte injection, and the like.

In some embodiments, the control device 130 may acquire the electrolyte injection data of the battery cell in the electrolyte injection procedure of the battery cell, and store the electrolyte injection data of the battery cell by using a position of the battery cell in the battery cell tray as an index. After receiving the data collection signal, the upper computer 120 may acquire, on the basis of the position of the battery cell in the battery cell tray, the electrolyte injection data of the battery cell corresponding to the position from the control device 130.

In some embodiments, the control device 130 may acquire the electrolyte injection data of the battery cell in the electrolyte injection procedure of the battery cell, and store the electrolyte injection data of the battery cell by using a battery cell code of the battery cell as an index. The upper computer 120 may store a correspondence between a position of each battery cell placed in the battery cell tray and a battery cell code in advance. In a case that the data collection signal is received, the upper computer 120 may query the correspondence on the basis of a position of a battery cell in the tray to obtain a battery cell code of the battery cell, and acquire electrolyte injection data of the battery cell corresponding to the battery cell code from the control device 130.

The control device 130 may send the data collection signal to the upper computer 120 after electrolyte injection of all battery cells in the battery cell tray is completed, to indicate the upper computer 120 to acquire electrolyte injection data of all the battery cells. The control device 130 may alternatively send the data collection signal to the upper computer 120 immediately after electrolyte injection of a specific battery cell in the battery cell tray is completed, to indicate the upper computer 120 to acquire electrolyte injection data of the battery cell, without waiting for completion of electrolyte injection of all battery cells in a battery cell set.

In the above-mentioned embodiment, the upper computer can collect and locally record the electrolyte injection data of the battery cell after electrolyte injection of the battery cell is completed. In addition, the electrolyte injection data of the battery cell and the bearing position of the battery cell in the battery cell tray are bound and stored, so that the electrolyte injection data of the corresponding battery cell can be acquired on the basis of the bearing position in the battery cell tray in a subsequent procedure. Further, after determining that electrolyte injection of the battery cell is completed, the control device sends the data collection signal to the upper computer, so that the upper computer can be controlled to acquire and record the electrolyte injection data of the battery cell in a timely manner, thereby reducing the probability of losing the electrolyte injection data due to an abnormal situation such as a power failure of the control device, and improving reliability of electrolyte injection data collection and operation stability of the electrolyte injection system.

For example, after electrolyte injection of the battery cell is completed, the electrolyte injection data of the battery cell is collected and recorded locally by the upper computer, so that before the battery cell arrives at an unloading area and prepares to leave a station, the electrolyte injection data of the battery cell can be quickly and reliably acquired from the upper computer, without depending on data transmission between a control device in an electrolyte injection station and a control device in the unloading area. Therefore, it is not necessary to consider whether there are other logistics lines between the electrolyte injection station and the unloading area, thereby adapting to more electrolyte injection scenarios.

In some embodiments, the upper computer 120 is configured to determine an electrolyte injection completion status of the battery cell on the basis of the electrolyte injection data of the battery cell, and bind and store the electrolyte injection data of the battery cell, the bearing position of the battery cell in the battery cell tray, and the electrolyte injection completion status locally in the upper computer 120.

In this way, the electrolyte injection data of the battery cell, the bearing position of the battery cell in the battery cell tray, and the electrolyte injection completion status are bound and stored locally in the upper computer, so that the electrolyte injection data of the battery cell can be acquired and/or whether electrolyte injection of the battery cell is completed can be determined quickly and accurately on the basis of the bearing position of the battery cell in the battery cell tray in a subsequent procedure.

For example, in a subsequent station entry procedure of the battery cell tray, the upper computer 120 may determine, on the basis of the electrolyte injection data of the battery cell, the bearing position of the battery cell in the battery cell tray, and the electrolyte injection completion status that are bound and stored locally, whether electrolyte injection of each battery cell in the battery cell tray has been completed, remove a battery cell for which electrolyte injection has been completed from a list of battery cells to be subjected to electrolyte injection to obtain an updated list of battery cells to be subjected to electrolyte injection, and then send a station entry request for a battery cell to the manufacturing execution system on the basis of the updated list of battery cells to be subjected to electrolyte injection. In this way, repeated electrolyte injection of the battery cell can be reduced, product quality and manufacturing efficiency can be improved, a material waste can be reduced, and manufacturing costs can be reduced.

In some embodiments, the upper computer 120 has a second display interface, and the second display interface includes a data deletion area. The upper computer 120 is configured to acquire, in response to receiving an electrolyte injection data deletion operation performed in the data deletion area, a tray identifier and/or a battery cell identifier for which data deletion is to be performed, and determine and locally delete, on the basis of the tray identifier and/or the battery cell identifier, electrolyte injection data respectively corresponding to at least one battery cell.

Here, the tray identifier may be a tray identifier of a battery cell tray to which a battery cell whose electrolyte injection data is to be deleted belongs. The battery cell identifier may be a battery cell identifier of a battery cell whose electrolyte injection data is to be deleted. The battery cell identifier may include, but is not limited to, at least one of a battery cell barcode, a tray code of a battery cell tray bearing the battery cell, a bearing position of the battery cell in the battery cell tray, and the like.

In some embodiments, the electrolyte injection data deletion operation performed in the data deletion area may be an operation of deleting electrolyte injection data of all battery cells in a battery cell tray. The upper computer 120 may acquire, in response to the electrolyte injection data deletion operation, a tray identifier of the battery cell tray for which data deletion is to be performed, determine at least one battery cell in the battery cell tray on the basis of the tray identifier, and locally delete electrolyte injection data respectively corresponding to the at least one battery cell from the upper computer 120.

In some embodiments, the electrolyte injection data deletion operation performed in the data deletion area may be an operation of deleting electrolyte injection data of a battery cell, and a battery cell identifier may include a battery cell barcode of the battery cell. The upper computer 120 may acquire, in response to the electrolyte injection data deletion operation, the battery cell barcode of the battery cell for which data deletion is to be performed, and locally delete the electrolyte injection data of the battery cell from the upper computer 120 on the basis of the battery cell barcode.

In some embodiments, the electrolyte injection data deletion operation performed in the data deletion area may be an operation of deleting electrolyte injection data of a battery cell located at a specific position in a specific battery cell tray, and a battery cell identifier may include the position of the battery cell in the battery cell tray. The upper computer 120 may acquire, in response to the electrolyte injection data deletion operation, a tray identifier of the battery cell tray in which the battery cell for which data deletion is to be performed is located, and the position of the battery cell in the battery cell tray, and determine and locally delete the electrolyte injection data of the battery cell from the upper computer 120 on the basis of the tray identifier and the position.

During implementation, an interface layout of the data deletion area and an operation mode of the electrolyte injection data deletion operation may be determined by those skilled in the art according to an actual situation, which is not limited in the embodiments of the present disclosure.

In some embodiments, the data deletion area may include a battery cell list, and the battery cell list may include at least one battery cell for which electrolyte injection data is locally recorded in the upper computer 120. Each battery cell in the battery cell list may correspond to one data deletion control. The electrolyte injection data deletion operation may include a trigger operation on a data deletion control corresponding to at least one battery cell. The operator may trigger a data deletion control corresponding to a battery cell in the data deletion area to locally delete electrolyte injection data of the battery cell from the upper computer 120.

In some embodiments, the data deletion area may include a tray identifier input control and/or a battery cell identifier input control, and the operator may input the tray identifier through the tray identifier input control and/or input the battery cell identifier through the battery cell identifier input control to trigger the electrolyte injection data deletion operation.

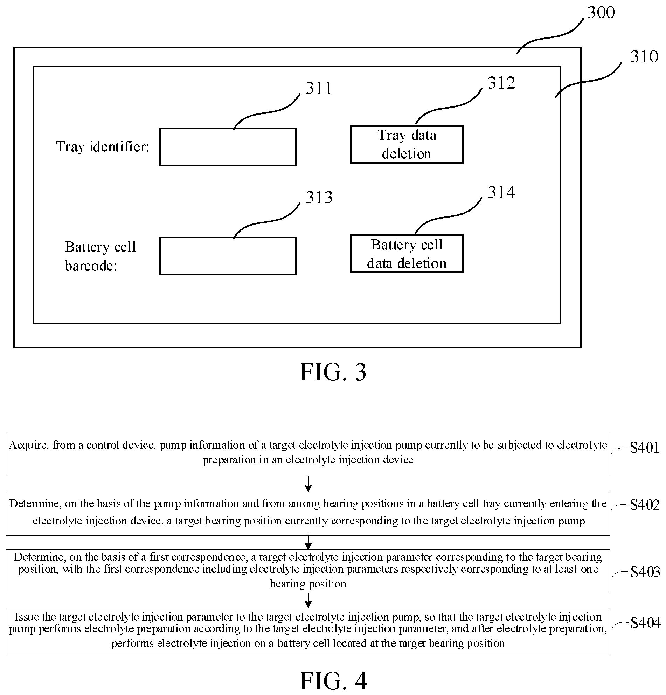

For example, referring to FIG. 3, a second display interface 300 may include a data deletion area 310, and the data deletion area 310 may include a tray identifier input control 311, a tray data deletion control 312, a battery cell identifier input control 313, and a battery cell data deletion control 314. The operator may input, by using the tray identifier input control 311, the tray identifier for which data deletion is to be performed, and perform the electrolyte injection data deletion operation by triggering the tray data deletion control 312. The upper computer may determine at least one battery cell in the battery cell tray on the basis of the tray identifier in response to the electrolyte injection data deletion operation, and locally delete the electrolyte injection data respectively corresponding to the at least one battery cell from the upper computer. The operator may input, by using the battery cell identifier input control 313, the battery cell identifier for which data deletion is to be performed, and perform the electrolyte injection data deletion operation by triggering the battery cell data deletion control 314. The upper computer may acquire the input battery cell barcode in response to the electrolyte injection data deletion operation, determine, on the basis of the battery cell barcode, the battery cell for which data deletion is to be performed, and locally delete the electrolyte injection data of the battery cell from the upper computer.

In this way, the operator can delete electrolyte injection data corresponding to a specific first tray identifier and/or battery cell identifier through the electrolyte injection data deletion operation performed in the data deletion area, thereby reducing a problem that corresponding electrolyte injection data is mistakenly recorded for a battery cell on which electrolyte injection is actually not completed in an abnormal case, and consequently electrolyte injection cannot be performed.

An embodiment of the present disclosure provides an electrolyte injection method. The electrolyte injection method may be performed by an upper computer. FIG. 4 is a schematic flowchart of implementation of an electrolyte injection method according to an embodiment of the present disclosure. As shown in FIG. 4, the method may include the following step S401 to step S404.

Step S401: Acquiring, from a control device, pump information of a target electrolyte injection pump currently to be subjected to electrolyte preparation in an electrolyte injection device.

Step S402: Determining, on the basis of the pump information and from among bearing positions in a battery cell tray currently entering the electrolyte injection device, a target bearing position currently corresponding to the target electrolyte injection pump.

Step S403: Determining, on the basis of a first correspondence, a target electrolyte injection parameter corresponding to the target bearing position, with the first correspondence including electrolyte injection parameters respectively corresponding to at least one bearing position.

Step S404: Issuing the target electrolyte injection parameter to the target electrolyte injection pump, so that the target electrolyte injection pump performs electrolyte preparation according to the target electrolyte injection parameter, and after electrolyte preparation, performs electrolyte injection on a battery cell located at the target bearing position.

In the electrolyte injection method in this embodiment of the present disclosure, the upper computer first acquires, from the control device, the pump information of the target electrolyte injection pump currently to be subjected to electrolyte preparation in the electrolyte injection device; then determines, on the basis of the pump information and from among the bearing positions in the battery cell tray currently entering the electrolyte injection device, the target bearing position currently corresponding to the target electrolyte injection pump; and finally determines, on the basis of the first correspondence, the target electrolyte injection parameter corresponding to the target bearing position, and issues the target electrolyte injection parameter to the target electrolyte injection pump, where the first correspondence includes the electrolyte injection parameters respectively corresponding to the at least one bearing position in the battery cell tray. In this way, on the one hand, it is not necessary to set a battery cell code for each battery cell in the tray, so that the upper computer does not need to write the battery cell code into the control device in an electrolyte injection and station entry procedure of the battery cell, and the control device does not need to record the battery cell code of each battery cell in the battery cell tray in the electrolyte injection procedure. On the other hand, in an electrolyte preparation procedure, the control device does not need to provide, for the upper computer, a battery cell code of a battery cell currently to be subjected to electrolyte injection. As such, an interaction process between the upper computer and the control device in the electrolyte injection procedure can be simplified, a quantity of point interactions between the upper computer and the control device can be reduced, and electrolyte injection and station entry of the battery cell and issue of the electrolyte injection parameter from the upper computer to the electrolyte injection pump can be accelerated, thereby decreasing overall duration of the electrolyte injection procedure and improving manufacturing efficiency.

In some embodiments, the electrolyte injection device includes at least one electrolyte injection pump, each electrolyte injection pump corresponds to N bearing positions in the battery cell tray, the electrolyte injection pump is configured to perform electrolyte injection on battery cells at the N corresponding bearing positions in N batches, N is a positive integer, and N does not exceed a total quantity of bearing positions in the battery cell tray. The pump information includes a pump number and/or a current electrolyte injection batch. The above-mentioned step S402 may include the following step S411:

Step S411: Determining, on the basis of the pump number and/or the current electrolyte injection batch, the target bearing position currently corresponding to the target electrolyte injection pump among the bearing positions in the battery cell tray.

In this way, the upper computer can simply and quickly determine, on the basis of the pump number and/or the current electrolyte injection batch of the target electrolyte injection pump provided by the control device, the target bearing position currently corresponding to the target electrolyte injection pump, thereby further reducing the quantity of point interactions between the upper computer and the control device.

In some embodiments, N is greater than 1. The above-mentioned step S411 may include the following step S421 and step S422.

Step S421: Determining, on the basis of the pump number, N bearing positions corresponding to the target electrolyte injection pump among the bearing positions in the battery cell tray.

Step S422: Determining, on the basis of the current electrolyte injection batch and from among the N bearing positions, the target bearing position currently corresponding to the target electrolyte injection pump.

In this way, the upper computer can quickly and accurately determine the target bearing position currently corresponding to the target electrolyte injection pump.

In some embodiments, the electrolyte injection device is provided with a plurality of electrolyte injection pumps, the plurality of electrolyte injection pumps are in one to-one correspondence with the bearing positions, and the pump information includes a pump number. The above-mentioned step S402 may include the following step S431:

Step S431: Determining, on the basis of the pump number and a second correspondence, the target bearing position currently corresponding to the target electrolyte injection pump. The second correspondence represents a one to-one correspondence between at least one pump number and the bearing positions.

In this way, the target bearing position currently corresponding to the target electrolyte injection pump can be quickly and accurately determined on the basis of the pump number of the target electrolyte injection pump and the one to-one correspondence between the at least one pump number and the bearing positions in the battery cell tray.

In some embodiments, before the above-mentioned step S401, the electrolyte injection method further includes: acquiring the first correspondence from a manufacturing execution system and recording the first correspondence locally in the upper computer in a station entry procedure in which the battery cell tray enters the electrolyte injection device.

In this way, in the station entry procedure of the battery cell tray, the upper computer can acquire the first correspondence from the manufacturing execution system, to determine the target electrolyte injection parameter corresponding to the target bearing position in an electrolyte preparation procedure on the basis of the first correspondence, without a need for the upper computer to send the battery cell code of each battery cell in the battery cell tray to the control device, thereby reducing interaction between the upper computer and the control device in the station entry procedure, and accelerating station entry of the battery cell tray.

In some embodiments, the electrolyte injection parameter includes an electrolyte injection amount. The above-mentioned step S403 may include the following step S441 and step S442.

Step S441: Acquire an enabling/disabling status of a quantitative electrolyte injection mode.

Step S442: Determining, on the basis of the first correspondence, a target electrolyte injection amount corresponding to the target bearing position in a case that the enabling/disabling status is a first state. The first state represents that the quantitative electrolyte injection mode is disabled.

In this way, the target electrolyte injection amount corresponding to the target bearing position can be determined on the basis of the first correspondence in a case that the quantitative electrolyte injection mode is disabled, thereby better satisfying an electrolyte injection requirement of a battery cell to be subjected to electrolyte injection at each bearing position in the battery cell tray in a non-quantitative electrolyte injection scenario.

In some embodiments, the electrolyte injection method further includes the following step S451 and step S452:

Step S451: Acquiring a preset electrolyte injection amount in a case that the enabling/disabling status is a second state. The second state represents that the quantitative electrolyte injection mode is enabled.

Step S452: Determining the preset electrolyte injection amount as the target electrolyte injection amount corresponding to the target bearing position.

In this way, the preset electrolyte injection amount can be determined as the target electrolyte injection amount corresponding to the target bearing position in a case that the quantitative electrolyte injection mode is enabled, so that issue of an electrolyte injection amount in a quantitative electrolyte injection scenario can be supported, to satisfy a quantitative electrolyte injection requirement of a battery cell to be subjected to electrolyte injection at each bearing position in the battery cell tray.

In some embodiments, the upper computer has a first display interface, and the first display interface includes a mode configuration area. The electrolyte injection method may further include the following step S461 or step S462:

Step S461: Setting the enabling/disabling status to the first state in response to receiving a quantitative electrolyte injection mode disabling operation performed in the mode configuration area.

Step S462: Setting the enabling/disabling status to the second state in response to receiving a quantitative electrolyte injection mode enabling operation performed in the mode configuration area.

In this way, the quantitative electrolyte injection mode can be flexibly enabled or disabled in the mode configuration area of the first display interface of the upper computer, thereby adapting to different electrolyte injection scenarios, to better satisfy an actual manufacturing requirement.

In some embodiments, the first display interface further includes an electrolyte injection amount configuration area. The acquiring a preset electrolyte injection amount in the above-mentioned step S451 may include the following step S471:

Step S471: Acquiring the set preset electrolyte injection amount in response to receiving an electrolyte injection amount setting operation performed in the electrolyte injection amount configuration area.

In this way, a suitable preset electrolyte injection amount can be set in the electrolyte injection amount configuration area of the first display interface of the upper computer according to an actual requirement, to better satisfy a quantitative electrolyte injection requirement in an actual manufacturing process.

In some embodiments, the electrolyte injection method may further include the following step S481 and step S482:

Step S481: Acquiring electrolyte injection data of at least one battery cell borne in the battery cell tray from the control device in response to receiving a data collection signal sent by the control device. The data collection signal is sent by the control device after the control device determines that electrolyte injection of the at least one battery cell is completed, and the electrolyte injection data of the battery cell is acquired by the control device in an electrolyte injection procedure of the battery cell.

Step S482: For each battery cell, binding and storing electrolyte injection data of the battery cell and a bearing position of the battery cell in the battery cell tray locally in the upper computer.

In this way, the upper computer can collect and locally record the electrolyte injection data of the battery cell after electrolyte injection of the battery cell is completed. In addition, the electrolyte injection data of the battery cell and the bearing position of the battery cell in the battery cell tray are bound and stored, so that the electrolyte injection data of the corresponding battery cell can be acquired on the basis of the bearing position in the battery cell tray in a subsequent procedure. Further, after determining that electrolyte injection of the battery cell is completed, the control device sends the data collection signal to the upper computer, so that the upper computer can be controlled to acquire and record the electrolyte injection data of the battery cell in a timely manner, thereby reducing the probability of losing the electrolyte injection data due to an abnormal situation such as a power failure of the control device, and improving reliability of electrolyte injection data collection and operation stability of the electrolyte injection system.

In some embodiments, the binding and storing electrolyte injection data of the battery cell and a bearing position of the battery cell in the battery cell tray locally in the upper computer in the above-mentioned step S482 may include the following step S491 and step S492:

Step S491: Determining an electrolyte injection completion status of the battery cell on the basis of the electrolyte injection data of the battery cell.

Step S492: Binding and storing the electrolyte injection data of the battery cell, the bearing position of the battery cell in the battery cell tray, and the electrolyte injection completion status locally in the upper computer.

In this way, the electrolyte injection data of the battery cell, the bearing position of the battery cell in the battery cell tray, and the electrolyte injection completion status are bound and stored locally in the upper computer, so that the electrolyte injection data of the battery cell can be acquired and/or whether electrolyte injection of the battery cell is completed can be determined quickly and accurately on the basis of the bearing position of the battery cell in the battery cell tray in a subsequent procedure.

The electrolyte injection method provided in the embodiments of the present disclosure is described below by using a secondary electrolyte injection process of a battery cell as an example.

In the related art, the secondary electrolyte injection process of the battery cell usually adopts a multi-channel electrolyte injection manner, a plurality of electrolyte injection channels are provided inside an electrolyte injection device, and the electrolyte injection channels are allocated, on the basis of idle states of the electrolyte injection channels, to battery cells to be subjected to electrolyte injection, to perform electrolyte injection. In a process in which a battery cell scans a code to enter a station, a battery cell code of each battery cell is written into a PLC of an electrolyte injection station through an upper computer. In addition, in an electrolyte preparation procedure, the upper computer acquires, from the control device, a battery cell code of a battery cell to be subjected to electrolyte injection that corresponds to an electrolyte injection pump, and issues an electrolyte injection parameter corresponding to the battery cell code to the electrolyte injection pump. After the electrolyte injection device completes electrolyte injection of the battery cell, the PLC binds and records electrolyte injection data of the battery cell and the battery cell code. When the battery cell scans a code to leave the station, the upper computer collects the electrolyte injection data of the battery cell from the PLC to complete a station exit procedure of the battery cell.

However, the electrolyte injection method in the related art has at least the following problems:
(1) The method is not suitable for a secondary electrolyte injection process using a tray-type electrolyte injection manner. During secondary electrolyte injection, an electrolyte injection amount of each battery cell is different. If electrolyte preparation is performed by channel, it is necessary to set a battery cell code for each battery cell in a tray, and write the battery cell code of each battery cell borne in the battery cell tray into the PLC in a process in which the battery cell tray scans a code to enter a station, increasing a quantity of interactions between the PLC and the upper computer, which is not conducive to improving manufacturing efficiency.
(2) After collecting electrolyte injection data of the battery cell, a control device of the electrolyte injection station may transmit the electrolyte injection data to a control device in an unloading area, thereby facilitating uploading of the electrolyte injection data in a station exit procedure of the battery cell. However, for the electrolyte injection process using the tray-type electrolyte injection manner, there may be other logistics lines from different suppliers between the electrolyte injection station and the unloading area. Battery cell trays are allocated to different unloading positions, and consequently data transmission cannot be implemented between the control device of the electrolyte injection station and the control device in the unloading area. As a result, the electrolyte injection data of the battery cell cannot be uploaded in a process in which the battery cell leaves the station.

On the basis of this, the embodiments of the present disclosure provide an electrolyte injection method. In the electrolyte injection method, an issue procedure of an electrolyte injection amount of a battery cell, a collection procedure of electrolyte injection data of a battery cell, and a marking procedure of an electrolyte injection completion status of a battery cell are designed.

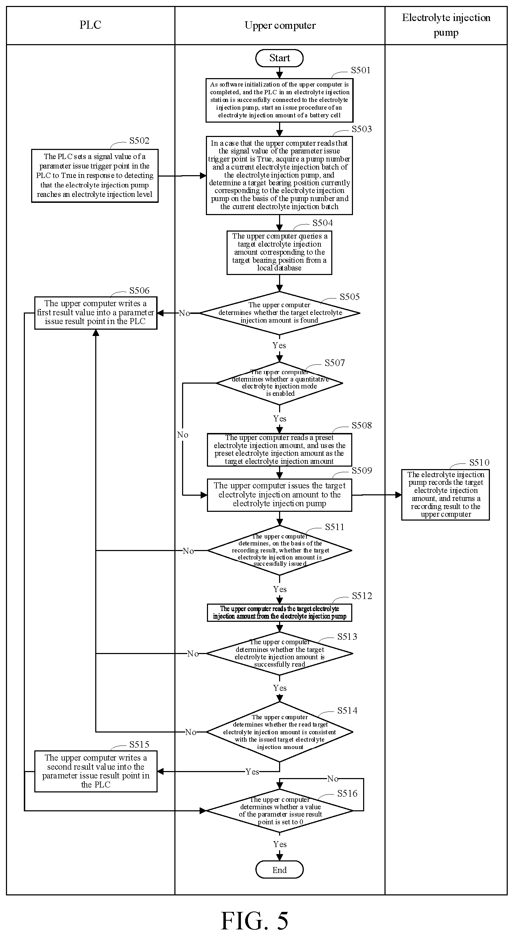

FIG. 5 is a schematic diagram of implementation of an issue procedure of an electrolyte injection amount of a battery cell according to an embodiment of the present disclosure. As shown in FIG. 5, the issue procedure of the electrolyte injection amount of the battery cell in this embodiment of the present disclosure includes the following step S501 to step S516.

Step S501: As software initialization of an upper computer is completed, and a PLC in an electrolyte injection station is successfully connected to an electrolyte injection pump, starting the issue procedure of the electrolyte injection amount of the battery cell.

Step S502: Setting, by the PLC, a signal value of a parameter issue trigger point in the PLC to True in response to detecting that the electrolyte injection pump reaches an electrolyte injection level.

It can be understood that, in this case, the electrolyte injection pump is a target electrolyte injection pump to be subjected to electrolyte preparation.

Step S503: In a case that the upper computer reads that the signal value of the parameter issue trigger point is True, acquiring a pump number and a current electrolyte injection batch of the electrolyte injection pump, and determining a target bearing position currently corresponding to the electrolyte injection pump on the basis of the pump number and the current electrolyte injection batch.

Step S504: Querying, by the upper computer, a target electrolyte injection amount corresponding to the target bearing position from a local database.

Here, in a process in which a battery cell tray scans a code to enter a station, the upper computer may acquire and record, in the local database, electrolyte injection amounts respectively corresponding to at least one bearing position in the battery cell tray.

Step S505: Determining, by the upper computer, whether the target electrolyte injection amount is found.

If no, proceeding to step S506. If yes, proceeding to step S507.

Step S506: Writing, by the upper computer, a first result value into a parameter issue result point in the PLC.

The first result value represents that an electrolyte injection parameter fails to be issued.

In some embodiments, the PLC may enter an exception processing flow in a case that the first result value is read from the parameter issue result point.

Step S507: Determining, by the upper computer, whether a quantitative electrolyte injection mode is enabled.

If yes, proceeding to step S508. If no, proceeding to step S509.

Step S508: Reading, by the upper computer, a preset electrolyte injection amount, and using the preset electrolyte injection amount as the target electrolyte injection amount.

Step S509: Issuing, by the upper computer, the target electrolyte injection amount to the electrolyte injection pump.

Step S510: Recording, by the electrolyte injection pump, the target electrolyte injection amount, and returning a recording result to the upper computer.

Step S511: Determining, by the upper computer on the basis of the recording result, whether the target electrolyte injection amount is successfully issued.

If yes, proceeding to step S512. If no, proceeding to step S506.

Step S512: Reading, by the upper computer, the target electrolyte injection amount from the electrolyte injection pump.

Step S513: Determining, by the upper computer, whether the target electrolyte injection amount is successfully read.

If yes, proceeding to step S514. If no, proceeding to step S506.

Step S514: Determining, by the upper computer, whether the read target electrolyte injection amount is consistent with the issued target electrolyte injection amount.

If yes, proceeding to step S515. If no, proceeding to step S506.

Step S515: Writing, by the upper computer, a second result value into the parameter issue result point in the PLC.

The second result value represents that the electrolyte injection parameter is successfully issued.

Step S516: Determining, by the upper computer, whether a value of the parameter issue result point is set to 0.

Here, the PLC may set the value of the parameter issue result point to 0 before a next issue procedure of the electrolyte injection amount of the battery cell. If it is determined that the value of the parameter issue result point has been set to 0, the current issue procedure of the electrolyte injection amount of the battery cell is ended.

It can be understood that the issue procedure of the electrolyte injection amount of the battery cell corresponds to an electrolyte preparation procedure of the electrolyte injection pump.

In the electrolyte injection method provided in the embodiments of the present disclosure, on the basis of the issue procedure of the electrolyte injection amount of the battery cell, a quantity of interactions between the upper computer and the PLC can be reduced, and issue of electrolyte injection amount data of the battery cell can be accelerated.

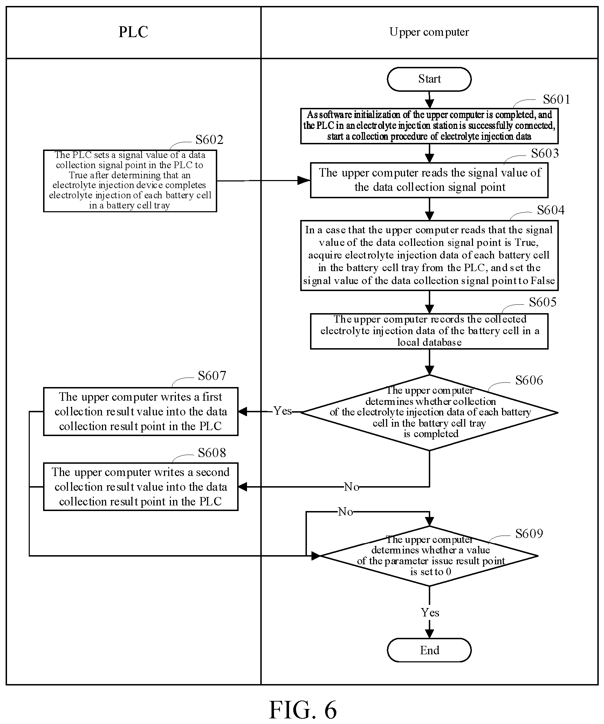

FIG. 6 is a schematic diagram of implementation of a collection procedure of electrolyte injection data of a battery cell according to an embodiment of the present disclosure. As shown in FIG. 6, the collection procedure of the electrolyte injection data of the battery cell includes the following step S601 to step S609.

Step S601: As software initialization of an upper computer is completed, and a PLC in an electrolyte injection station is successfully connected, starting the collection procedure of the electrolyte injection data.

Step S602: Setting, by the PLC, a signal value of a data collection signal point in the PLC to True after determining that an electrolyte injection device completes electrolyte injection of each battery cell in a battery cell tray.

Step S603: Reading, by the upper computer, the signal value of the data collection signal point.

Step S604: In a case that the upper computer reads that the signal value of the data collection signal point is True, acquiring electrolyte injection data of each battery cell in the battery cell tray from the PLC, and setting the signal value of the data collection signal point to False.

Step S605: Recording, by the upper computer, the collected electrolyte injection data of the battery cell in a local database.

Step S606: Determining, by the upper computer, whether collection of the electrolyte injection data of each battery cell in the battery cell tray is completed.

If yes, proceeding to step S607. If no, proceeding to step S608.

Step S607: Writing, by the upper computer, a first collection result value into the data collection result point in the PLC.

The first collection result value may indicate that the electrolyte injection data of each battery cell in the battery cell tray is collected and recorded successfully.

Step S608: Writing, by the upper computer, a second collection result value into the data collection result point in the PLC.

The second collection result value may indicate that electrolyte injection data of at least one battery cell in the battery cell tray is not collected and recorded successfully.

Step S609: Determining, by the upper computer, whether a value of the data collection result point is set to 0.

Here, the PLC may set the value of the data collection result point to 0 before a next collection procedure of the electrolyte injection data of the battery cell. If it is determined that the value of the data collection result point has been set to 0, the current collection procedure of the electrolyte injection data of the battery cell is ended.

In the electrolyte injection method provided in the embodiments of the present disclosure, on the basis of the collection procedure of the electrolyte injection data of the battery cell, the electrolyte injection data of the battery cell may be recorded immediately after electrolyte injection of the battery cell is completed, and the electrolyte injection data of the battery cell and a bearing position of the battery cell in the battery cell tray are bound and stored, so that data in the tray is not disordered.

In some embodiments, after recording the electrolyte injection data of the battery cell in the local database, the upper computer may further mark an electrolyte injection completion status of the battery cell as "electrolyte injection completed".

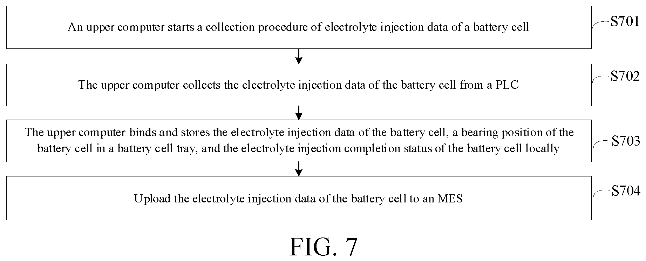

FIG. 7 is a schematic diagram of implementation of a marking procedure of an electrolyte injection completion status of a battery cell according to an embodiment of the present disclosure. As shown in FIG. 7, the marking procedure of the electrolyte injection completion status of the battery cell provided in this embodiment of the present disclosure may be the following step S701 to step S704.

Step S701: Starting, by an upper computer, a collection procedure of electrolyte injection data of the battery cell.

Step S702: Collecting, by the upper computer, the electrolyte injection data of the battery cell from a PLC.

Step S703: Binding and storing, by the upper computer, the electrolyte injection data of the battery cell, a bearing position of the battery cell in a battery cell tray, and the electrolyte injection completion status of the battery cell locally.

Here, the electrolyte injection completion status of the battery cell is marked as "electrolyte injection completed".

Step S704: Uploading the electrolyte injection data of the battery cell to an MES.

In some embodiments, a plurality of data processing threads may be started simultaneously in an asynchronous multi-thread manner to collect and store electrolyte injection data of each battery cell borne in a battery cell tray, to improve efficiency of collecting and storing the electrolyte injection data. For example, in a case that there are 24 battery cells borne in the battery cell tray, 24 threads may be started simultaneously to respectively collect and store electrolyte injection data of each battery cell. During implementation, a count variable with an initial value of 0 may be further set according to an atomic accumulation technology, and the count variable is increased by 1 each time after each data processing thread in the upper computer collects and stores electrolyte injection data of one battery cell, until a value of the count variable is equal to a quantity of battery cells borne in the battery cell tray.

It should be noted here that: The above-mentioned descriptions of the embodiments tend to emphasize differences between the embodiments. For same or similar parts thereof, mutual reference may be made to these embodiments.

It should be understood that "one embodiment" or "an embodiment" mentioned in the entire specification means that particular features, structures, or characteristics related to the embodiment are included in at least one embodiment of the present disclosure. Therefore, "in one embodiment" or "in an embodiment" appearing throughout the specification does not necessarily indicate a same embodiment. Further, these specific features, structures, or characteristics may be combined in one or more embodiments in any suitable manner. It should be understood that in various embodiments of the present disclosure, sequence numbers of the above-mentioned steps/processes do not mean a sequence of execution. The sequence of execution of the steps/processes should be determined according to functions and internal logic of the steps/processes, and should not constitute any limitation on an implementation process of the embodiments of the present disclosure. The above-mentioned sequence numbers of the embodiments of the present disclosure are merely for description, and do not represent advantages and disadvantages of the embodiments.

It should be noted that, in this specification, the term "include", "have", or any other variant thereof is intended to cover non-exclusive inclusion, so that a process, method, article, or apparatus that includes a series of elements includes not only those elements but also other elements that are not explicitly listed, or includes elements inherent to such a process, method, article, or apparatus. In a case without more restrictions, for an element limited by the statement "include a...", a process, method, article, or apparatus that includes the element may further include another same element. In several embodiments provided in the present disclosure, it should be understood that the disclosed controllers and methods may be implemented in other ways. The controller embodiment described above is merely an example. For example, division into the units is merely logical function division, and there may be other division manners during actual implementation. For example, a plurality of units or components may be combined or integrated into another system, or some features may be ignored or not performed. In addition, the shown or discussed mutual coupling or direct coupling or communication connection between the components may be through some interfaces, and the indirect coupling or communication connection between the controllers or units may be in an electrical, mechanical, or other forms.

The units described as separate parts may or may not be physically separate, and parts displayed as units may or may not be physical units; and may be located in one place or distributed on a plurality of network units. Some or all of the units may be selected according to actual requirements to achieve the purpose of the solution of this embodiment. In addition, functional units in the embodiments of the present disclosure may all be integrated into one processing unit, or each unit may be separately used as one unit, or two or more units may be integrated into one unit. The above-mentioned integrated unit may be implemented in a form of hardware, or may be implemented in a form of hardware and a software functional unit.

The above descriptions are merely embodiments of the present disclosure, and are not intended to limit the protection scope of the present disclosure. The changes or replacements readily figured out by those skilled in the art within the technical scope disclosed in the present disclosure shall all fall within the protection scope of the present disclosure.

## Claims

1. An electrolyte injection system, comprising:
an electrolyte injection device, an upper computer and a control device; wherein the electrolyte injection device comprises at least one electrolyte injection pump;
the control device is configured to send to the upper computer pump information of a target electrolyte injection pump currently to be subjected to electrolyte preparation in the electrolyte injection device;
the upper computer is configured to: acquire the pump information from the control device; determine, on the basis of the pump information and from among bearing positions in a battery cell tray currently entering the electrolyte injection device, a target bearing position currently corresponding to the target electrolyte injection pump; determine, on the basis of a first correspondence, a target electrolyte injection parameter corresponding to the target bearing position, with the first correspondence comprising electrolyte injection parameters respectively corresponding to at least one bearing position; and issue the target electrolyte injection parameter to the target electrolyte injection pump; and
the target electrolyte injection pump is configured to perform electrolyte preparation according to the target electrolyte injection parameter, and after electrolyte preparation, perform electrolyte injection on a battery cell located at the target bearing position.

2. The electrolyte injection system according to claim 1, wherein each electrolyte injection pump corresponds to N bearing positions in the battery cell tray, the electrolyte injection pump is configured to perform electrolyte injection on battery cells at the N corresponding bearing positions in N batches, N is a positive integer, and N does not exceed a total quantity of bearing positions in the battery cell tray; the pump information comprises a pump number and/or a current electrolyte injection batch; and
the upper computer is configured to determine, on the basis of the pump number and/or the current electrolyte injection batch, the target bearing position currently corresponding to the target electrolyte injection pump among the bearing positions in the battery cell tray.

3. The electrolyte injection system according to claim 2, wherein N is greater than 1; and
the upper computer is configured to: determine, on the basis of the pump number, N bearing positions corresponding to the target electrolyte injection pump among the bearing positions in the battery cell tray; and determine, on the basis of the current electrolyte injection batch and from among the N bearing positions, the target bearing position currently corresponding to the target electrolyte injection pump.

4. The electrolyte injection system according to claim 1, wherein the electrolyte injection device is provided with a plurality of electrolyte injection pumps, the plurality of electrolyte injection pumps are in one to-one correspondence with the bearing positions, and the pump information comprises a pump number;
the upper computer is configured to determine, on the basis of the pump number and a second correspondence, the target bearing position currently corresponding to the target electrolyte injection pump; and the second correspondence represents a one to-one correspondence between at least one pump number and the bearing positions.

5. The electrolyte injection system according to any one of claims 1 to 4, wherein
the upper computer is configured to acquire the first correspondence from a manufacturing execution system and record the first correspondence locally in the upper computer in a station entry procedure in which the battery cell tray enters the electrolyte injection device.

6. The electrolyte injection system according to any one of claims 1 to 5, wherein the electrolyte injection parameter comprises an electrolyte injection amount;
the upper computer is configured to: acquire an enabling/disabling status of a quantitative electrolyte injection mode; and determine, on the basis of the first correspondence, a target electrolyte injection amount corresponding to the target bearing position in a case that the enabling/disabling status is a first state; and the first state represents that the quantitative electrolyte injection mode is disabled.

7. The electrolyte injection system according to claim 6, wherein
the upper computer is configured to acquire a preset electrolyte injection amount and determine the preset electrolyte injection amount as the target electrolyte injection amount corresponding to the target bearing position in a case that the enabling/disabling status is a second state; and the second state represents that the quantitative electrolyte injection mode is enabled.

8. The electrolyte injection system according to claim 7, wherein the upper computer has a first display interface, and the first display interface comprises a mode configuration area; and
the upper computer is configured to set the enabling/disabling status to the first state in response to receiving a quantitative electrolyte injection mode disabling operation performed in the mode configuration area;
or the upper computer is configured to set the enabling/disabling status to the second state in response to receiving a quantitative electrolyte injection mode enabling operation performed in the mode configuration area.

9. The electrolyte injection system according to claim 8, wherein the first display interface further comprises an electrolyte injection amount configuration area; and
the upper computer is configured to acquire the set preset electrolyte injection amount in response to receiving an electrolyte injection amount setting operation performed in the electrolyte injection amount configuration area.

10. The electrolyte injection system according to any one of claims 1 to 9, wherein
the control device is configured to: acquire electrolyte injection data of a battery cell in an electrolyte injection procedure of the battery cell, and send a data collection signal to the upper computer in response to determining that electrolyte injection of at least one battery cell borne in the battery cell tray is completed; and
the upper computer is configured to acquire electrolyte injection data of the at least one battery cell from the control device in response to receiving the data collection signal, and for each battery cell, bind and store electrolyte injection data of the battery cell and a bearing position of the battery cell in the battery cell tray locally in the upper computer.

11. The electrolyte injection system according to claim 10, wherein
the upper computer is configured to determine an electrolyte injection completion status of the battery cell on the basis of the electrolyte injection data of the battery cell, and bind and store the electrolyte injection data of the battery cell, the bearing position of the battery cell in the battery cell tray, and the electrolyte injection completion status locally in the upper computer.

12. An electrolyte injection method, applied to an upper computer, and comprising:
acquiring, from a control device, pump information of a target electrolyte injection pump currently to be subjected to electrolyte preparation in an electrolyte injection device;
determining, on the basis of the pump information and from among bearing positions in a battery cell tray currently entering the electrolyte injection device, a target bearing position currently corresponding to the target electrolyte injection pump;
determining, on the basis of a first correspondence, a target electrolyte injection parameter corresponding to the target bearing position, with the first correspondence comprising electrolyte injection parameters respectively corresponding to at least one bearing position; and
issuing the target electrolyte injection parameter to the target electrolyte injection pump, so that the target electrolyte injection pump performs electrolyte preparation according to the target electrolyte injection parameter, and after electrolyte preparation, performs electrolyte injection on a battery cell located at the target bearing position.

13. The electrolyte injection method according to claim 12, wherein the electrolyte injection device comprises at least one electrolyte injection pump, each electrolyte injection pump corresponds to N bearing positions in the battery cell tray, the electrolyte injection pump is configured to perform electrolyte injection on battery cells at the N corresponding bearing positions in N batches, N is a positive integer, and N does not exceed a total quantity of bearing positions in the battery cell tray; the pump information comprises a pump number and/or a current electrolyte injection batch; and
the determining, on the basis of the pump information and from among bearing positions in a battery cell tray currently entering the electrolyte injection device, a target bearing position currently corresponding to the target electrolyte injection pump comprises:
determining, on the basis of the pump number and/or the current electrolyte injection batch, the target bearing position currently corresponding to the target electrolyte injection pump among the bearing positions in the battery cell tray.

14. The electrolyte injection method according to claim 13, wherein N is greater than 1; and
the determining, on the basis of the pump number and/or the current electrolyte injection batch, the target bearing position currently corresponding to the target electrolyte injection pump among the bearing positions in the battery cell tray comprises:
determining, on the basis of the pump number, N bearing positions corresponding to the target electrolyte injection pump among the bearing positions in the battery cell tray; and
determining, on the basis of the current electrolyte injection batch and from among the N bearing positions, the target bearing position currently corresponding to the target electrolyte injection pump.

15. The electrolyte injection method according to claim 12, wherein the electrolyte injection device is provided with a plurality of electrolyte injection pumps, the plurality of electrolyte injection pumps are in one to-one correspondence with the bearing positions, and the pump information comprises a pump number;
the determining, on the basis of the pump information and from among bearing positions in a battery cell tray currently entering the electrolyte injection device, a target bearing position currently corresponding to the target electrolyte injection pump comprises:
determining, on the basis of the pump number and a second correspondence, the target bearing position currently corresponding to the target electrolyte injection pump; and the second correspondence represents a one to-one correspondence between at least one pump number and the bearing positions.

16. The electrolyte injection method according to any one of claims 12 to 15, wherein the electrolyte injection parameter comprises an electrolyte injection amount;
the determining, on the basis of a first correspondence, a target electrolyte injection parameter corresponding to the target bearing position comprises:
acquiring an enabling/disabling status of a quantitative electrolyte injection mode; and
determining, on the basis of the first correspondence, a target electrolyte injection amount corresponding to the target bearing position in a case that the enabling/disabling status is a first state; and the first state represents that the quantitative electrolyte injection mode is disabled.

17. The electrolyte injection method according to claim 16, further comprising:
acquiring a preset electrolyte injection amount in a case that the enabling/disabling status is a second state; wherein the second state represents that the quantitative electrolyte injection mode is enabled; and
determining the preset electrolyte injection amount as the target electrolyte injection amount corresponding to the target bearing position.

18. The electrolyte injection method according to any one of claims 12 to 17, further comprising:
acquiring electrolyte injection data of at least one battery cell borne in the battery cell tray from the control device in response to receiving a data collection signal sent by the control device; wherein the data collection signal is sent by the control device after the control device determines that electrolyte injection of the at least one battery cell is completed, and the electrolyte injection data of the battery cell is acquired by the control device in an electrolyte injection procedure of the battery cell; and
for each battery cell, binding and storing electrolyte injection data of the battery cell and a bearing position of the battery cell in the battery cell tray locally in the upper computer.

19. The electrolyte injection method according to claim 18, wherein the binding and storing electrolyte injection data of the battery cell and a bearing position of the battery cell in the battery cell tray locally in the upper computer comprises:
determining an electrolyte injection completion status of the battery cell on the basis of the electrolyte injection data of the battery cell; and
binding and storing the electrolyte injection data of the battery cell, the bearing position of the battery cell in the battery cell tray, and the electrolyte injection completion status locally in the upper computer.

20. The electrolyte injection method according to any one of claims 12 to 19, further comprising:
acquiring the first correspondence from a manufacturing execution system and recording the first correspondence locally in the upper computer in a station entry procedure in which the battery cell tray enters the electrolyte injection device.
